# NEW EUROPEAN PATENT SPECIFICATION

(11) **EP 0 609 230 B2**
(45) Date of publication and mention of the opposition decision: **20.06.2001**
(45) Mention of the grant of the patent: 18.12.1996
(21) Application number: 92918586.6
(22) Date of filing: 28.08.1992
(51) Int. Cl.: F16D 13/70, F16D 13/52

(54) **A FRICTION CLUTCH**
REIBUNGSKUPPLUNG
EMBRAYAGE A FRICTION

(30) Priority: 04.10.1991 GB 9121155
(43) Date of publication of application: 10.08.1994
(73) Proprietor: AP Racing Limited, Coventry, Warwickshire CV3 4LB (GB)
(72) Inventor: NASH, Ian, Anthony 32 Crane Close, Warwick CV31 5AP (GB)
(74) Representative: Morrall, Roger
(86) International application number: PCT/GB92/01575
(87) International publication number: WO 93/07400

(56) References cited:
- DE-A- 1 630 472
- DE-A- 2 164 297
- FR-A- 806 433
- FR-A- 2 546 591
- FR-A- 2 669 697

## Description

This invention relates to friction clutches and in particular to motor vehicle friction clutches, particularly for use in cars, more preferably racing cars.

The type of friction clutches used in racing cars are such that the clutch pedal travel between a clutch release position and a clutch engaged position is very small. This in effect means that the clutch engagement is very sudden and sharp.

Previous attempts to reduce the sudden engagement of the clutch have been disclosed in, for example, FR-A-2546591 in which three equi-spaced flexible spring plates bias a reaction plate away from a flywheel member to provide axial cushioning on clutch engagement.

The present invention seeks to further improve the take-up of such friction clutches.

According to the invention there is provided a friction clutch for a motor vehicle which comprises a flywheel which is attachable to an engine crankshaft, an annular plate coaxial with and rotationally fast with the flywheel and which is biased away from the flywheel by a first spring means which provides a cushion load between the flywheel and said plate, a clutch cover secured to and axially fixed relative to the flywheel, a pressure plate, a second spring means acting between the cover and the pressure plate to provide a clamp load to urge the pressure plate towards the flywheel, at least one driven plate sandwiched between the pressure plate and the annular plate, said first spring means allowing a variation in the axial position of said annular plate relative to the cover to provide cushioning of clutch engagement and disengagement, characterised in that the maximum axial spacing between the flywheel and the annular plate is adjustable and, with the clutch fully engaged, the clamp load is greater than the cushion load and in that the first spring means acts on the annular plate through a spring end cap which limits the maximum axial expansion of the first spring means, the spring end cap being secured to the flywheel for axial movement relative thereto such that the spring end cap remains secured to the flywheel on removal of the annular plate from the clutch.

By providing the ability to adjust the maximum axial spacing between the flywheel and the annular plate, the progressivity of the cushioning can be adjusted to meet the individual operating characteristics of each clutch installation.

Preferably the annular plate is a second flywheel mass coaxial with the said flywheel mass.

Alternatively when the clutch is a multi plate clutch comprising a plurality of driven plates, each located between axially separable drive plates, the annular plate is provided by one of the drive plates.

The invention will be described by way of example and with reference to the following drawings in which:-
Fig 1 is a section through a first clutch assembly according to the invention;
Fig 2 is an enlargement of a detail from Fig 1;
Fig 2A is a part view similar to Figure 2 showing a further embodiment with a belleville spring which is coaxial with the flywheel;
Fig 3 is an alternative version of the clutch of Fig 1;
Fig 4 is an enlargement of a detail from Fig 3;
Fig 5 is a graph of release load versus release bearing travel and pressure plate lift for prior art clutches and clutches according to the present invention.

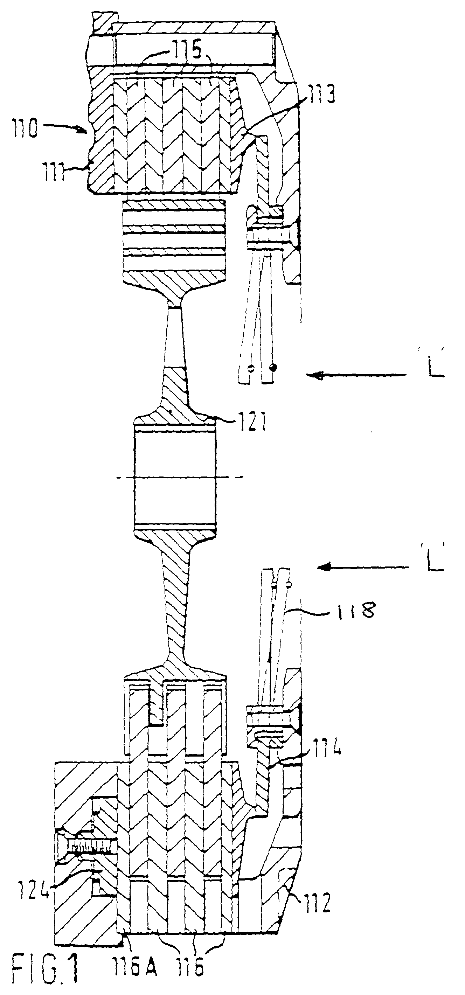

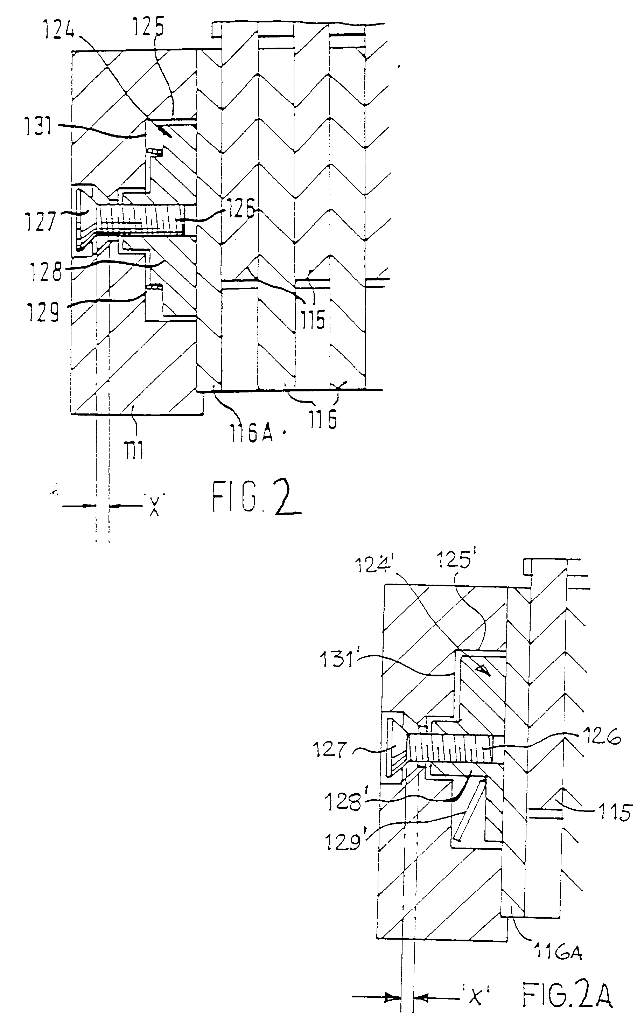

With reference to Fig 1 and Fig 2 there is illustrated a motor vehicle clutch according to the invention which is a multiplate clutch 110 of the type used in racing cars or motorcycles. The clutch 110 includes a flywheel 111 which in use can be fixed to the crankshaft of an internal combustion engine (not shown), and a clutch cover assembly 112 which is bolted to the flywheel 111. The clutch cover asembly includes a plurality of driven plates 115 having inner radial teeth that engage a central hub 121. The driven plates 115 are sandwiched between drive plates 116 which have outer radial teeth that engage the clutch cover assembly 112. The arrangement is such that the driven plates 115 and drive plates 116 are all axially moveable relative to the flywheel 111. The cover assembly 112 also includes a diaphragm spring 114 that biases a pressure plate 113 against the stack of drive and driven plates to clamp them against the flywheel 111.

The diaphragm spring is a frustoconical spring comprising a radially outer annular portion having a plurality of radially inwardly extending spaced fingers 118 thereon. The spring 114 is coned away from the flywheel 111.

The driven plate 116A adjacent the flywheel 111 constitutes an annular plate and is biased away from the flywheel by a plurality of spring elements 124 circumferentially spaced around the flywheel. There are preferably between three and six spring elements 124 (but could be more) each of which is located in a recess in the form of a stepped axial bore 125 in the face of the flywheel adjacent the annular plate 116A.

Each spring element 124 comprises a screw 126 having a head 127 which is located in a countersunk hole in the surface of the flywheel away from the annular plate 116A. The screw 126 has a threaded connection with a spring end cap 128. A helical spring 129 is located in the stepped bore 125 and acts between a shoulder 131 therein and the spring end cap 128 to bias the end cap against the annular plate 116A. The axial movement 'X' of the end cap 128 toward the cover assembly 112 is limited by abutment of the screw head 127 against the countersunk hole. This distance is adjustable as required by altering the effective distance between the screw head 127 and the end cap 128.

The total maximum spring load of the helical springs 129 is less than the load exerted by the diaphragm spring 114, but is varied to suit the requirements of the vehicle. This enables the adjustment of clamp load V's release travel characteristic for required comfort of torque transfer.

When a clutch release bearing (not shown) applies a clutch release travel 'L' to the radially inner ends of the fingers 118 of the diaphragm spring 114 the clamp load exerted on the pressure plate 113 decreases.

As the pressure plate 113 moves away from the flywheel 111, the bias of the spring elements 124 keeps the driven plates 115 sandwiched between the annular plate 116A and the pressure plate 113 so that the clamping load on the driven plates is slowly reduced until the spring end cap 128 has moved axially a distance 'X' against the abutment 127, and thereafter the pressure plate moves axially away from the driven plates and the rate at which the clamp load is removed increases.

When the clutch is engaged the reverse sequence of events takes place. The pressure plate 113 clamps the driven plates 115 against the annular plate 116A with the initial clamping load being cushioned by the spring elements 124.

As the clamping load is increased the annular plate 116A moves towards the flywheel 111 against an increasing resistance from the spring elements 124, until the annular plate 116A abuts the flywheel 111.

The sequence of events is illustrated in Fig 5 which is a graph of clamp load (i.e. the load on the driven plates) versus release travel and pressure plate lift. Release travel is the distance moved by the release bearing during operation of the clutch. The curve A represents clamp load versus release travel for a typical racing non cushioned clutch in which the driven plates are sandwiched against a solid flywheel. The curve B represents clamp load versus release travel for a clutch according to the present invention. It will soon be seen that as the release bearing travel is reduced i.e. during clutch engagement, the clamp load is applied to the driven plate more gradually in the case of 'B' than 'A'.

With reference to Figure 2A there is illustrated a multi plate friction clutch similar to the multi plate friction clutch 110 except the plurality of spring elements 124 have been replaced with a single spring element 124' which is concentric with the flywheel.

The spring element 124' is located in annular stepped recess 125' in the face of, and concentric with the flywheel adjacent the annular plate 116A.

The spring element 124' comprises a plurality of screws 126, a belleville spring 129' and an annular end cap 128'. Each screw has a head 127 which is located in a countersunk hole in the face of the flywheel away from the annular plate 116A and has a threaded connection with the annular end cap 128'. The belleville spring 129' is located in the annular stepped recess 125' and is concentric with the flywheel and acts between a shoulder 131' therein and the spring end cap 128' to bias the end cap against the annular plate 116A.

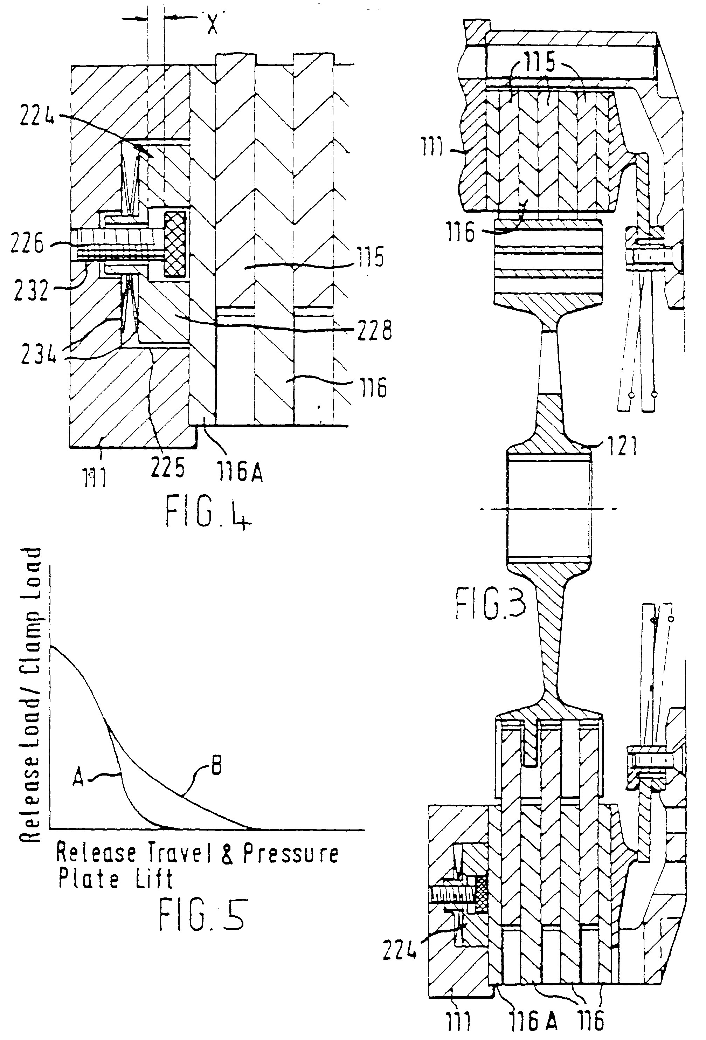

The friction clutch illustrated in Fig 3 and 4 is substantially identical to that shown in Figures 1 and 2 excepting for the spring elements 224. The spring elements 224 are again housed in a recess 225 in the flywheel 111. However the recess 225 is blind bore having a coaxial screw threaded hole 232 in the base thereof. A screw 226 cooperates with the threaded hole 232 to form a variable length strut to limit the axial movement of a spring end cap 228 away from the flywheel under the bias of two back to back belleville washers 234 located by the end cap 228.

It will be appreciated that the above examples are only selected means of performing the invention. For example the helical spring of Fig 1 could be used in conjunction with the screw and end cap of Fig 5, and the belleville washers of Fig 3 could be used in Fig 1 etc. Furthermore, springs made from elastomeric material could also be used.

It should be further noted that the invention is not limited to multi-plate clutches and can be equally applied to a clutch having a single driven plate clamped between a pressure plate and a flywheel. In such an arrangement, the annular plate would be positioned between the flywheel and the driven plate. The annular plate being guided for axial movement relative to the flywheel under the influence of spring means acting on the annular plate via a spring end cap in accordance with the invention. The annular plate may comprise a second flywheel mass coaxial with the first flywheel.

All these combinations will operate as previously described with reference to Fig 5.

## Claims

1. A friction clutch (110) for a motor vehicle which comprises a flywheel (111) which is attachable to an engine crankshaft, an annular plate (116A) coaxial with and rotationally fast with the flywheel and which is biased away from the flywheel by a first spring means (129, 129', 234) which provides a cushion load between the flywheel and said plate, a clutch cover (112) secured to and axially fixed relative to the flywheel, a pressure plate (113), a second spring means (114) acting between the cover and the pressure plate to provide a clamp load to urge the pressure plate towards the flywheel, at least one driven plate (115) sandwiched between the pressure plate and the annular plate, said first spring means allowing a variation in the axial position of said annular plate relative to the cover to provide cushioning of clutch engagement and disengagement, characterized in that the maximum axial spacing between the flywheel and the annular plate is adjustable and, with the clutch (110) fully engaged, the clamp load is greater than the cushion load and in that the first spring means acts on the annular plate through a spring end cap (128, 128', 228) which limits the maximum axial expansion of the first spring means, the spring end cap being secured to the flywheel for axial movement relative thereto such that the spring end cap remains secured to the flywheel on removal of the annular plate from the clutch.

2. A friction clutch as claimed in claim 1 wherein the first spring means comprises a plurality of spring elements (129, 234) circumferentially spaced around the flywheel.

3. A friction clutch as claimed in claim 2 wherein the spring elements (129, 234) are each housed in a recess (25,225) in the axially directed face of the flywheel (111) to act against the adjacent axially directed face of the annular plate (116A).

4. A friction clutch as claimed in any one of claims 1 to 3, wherein the axial expansion of the first spring means (129, 129', 234) is limited by an abutment (127) the axial position of which is adjustable by a screw threaded means.

5. A friction clutch as claimed in claim 4 wherein the abutment (127) is constituted by the head of a screw threaded bolt (127, 226) or set screw which is coaxial with said recess.

6. A friction clutch as claimed in claim 4 or claim 5 wherein each spring element (129, 129', 234) is located in a recess (125, 125', 225) in the flywheel and acts against the annular plate through the spring end cap (128, 128', 228) which serves to locate the spring element in the recess.

7. A friction clutch as claimed in any one of claims 2 to 6 wherein each spring element is a helical compression spring (129).

8. A friction clutch as claimed in any one of claims 2 to 6 wherein each spring element comprises at least one belleville washer (129', 234).

9. A friction clutch as claimed in any one of claims 2 to 6 wherein each spring element is made from elastomeric material.

10. A friction clutch as claimed in claim 1 wherein the first spring means is made from elastomeric material.

11. A friction clutch as claimed in any one of Claims 1,4,5 and 6, wherein the first spring means is a single belleville spring (129') coaxial with the flywheel and said annular plate.

12. A friction clutch as claimed in any one of Claims 1 to 11 wherein the annular plate is a second flywheel mass coaxial with the first flywheel.

13. A friction clutch as claimed in any one of Claims 1 to 11 wherein the clutch (110) is a multiplate clutch comprising a plurality of driven plates (115) each located between axially separable drive plates (116) rotationally fast with the flywheel, and said annular plate (116A) comprises one of the drive plates.

## Patentansprüche

1. Reibungskupplung (110) für ein Kraftfahrzeug mit einem Schwungrad (111), das an einer Kurbelwelle des Motors befestigbar ist, einer Ringscheibe (116A), die koaxial und drehfest mit dem Schwungrad verbunden ist, und die von dem Schwungrad weg durch eine erste Federeinrichtung (129, 129', 224), die eine Dämpfbelastung zwischen dem Schwungrad und der Scheibe schafft, vorgespannt wird, einem Kupplungsdeckel (112), der an dem Schwungrad befestigt und in axialer Richtung relativ dazu fixiert ist, einer Anpreßplatte (113), einer zweiten Federeinrichtung (114), die zwischen dem Deckel und der Anpreßplatte wirkt, um einen Klemmdruck zu schaffen, um die Anpreßplatte in Richtung auf das Schwungrad zu drängen, mindestens einer getriebenen Scheibe (115), die zwischen der Anpreßplatte und der Ringscheibe angeordnet ist, wobei die erste Federeinrichtung eine Veränderung der axialen Position der Ringscheibe relativ zu dem Deckel gestattet, um eine Dämpfung der Einkupplung und Auskupplung zu schaffen, dadurch gekennzeichnet, daß der maximale axiale Abstand zwischen dem Schwungrad (111) und der Ringscheibe (116A) einstellbar, und, wenn die Kupplung (110) voll im Eingriff ist, der Klemmdruck größer als die Dämpfbelastung ist, und dadurch, daß die erste Federeinrichtung auf die Ringscheibe über einen Federdeckel (128, 128', 228) wirkt, der die maximale axiale Ausdehnung der ersten Federeinrichtung begrenzt, wobei der Federdeckel an dem Schwungrad für eine axiale Bewegung relativ dazu derart befestigt ist, daß der Federdeckel an dem Schwungrad bei Entfernung der Ringscheibe von der Kupplung befestigt bleibt.

2. Reibungskupplung nach Anspruch 1, dadurch gekennzeichnet, daß die erste Federeinrichtung eine Vielzahl von Federelementen (129, 234) aufweist, die um das Schwungrad herum in Umfangsrichtung mit Abständen angeordnet ist.

3. Reibungskupplung nach Anspruch 2, dadurch gekennzeichnet, daß die Federelemente (129, 234) jeweils in einer Aussparung (25, 225) in der axial ausgerichteten Fläche des Schwungrads (111) untergebracht sind, um gegen die benachbarte, axial ausgerichtete Fläche der Ringscheibe (116A) zu wirken.

4. Reibungskupplung nach einem der Ansprüche 1 bis 3, dadurch gekennzeichnet, daß die axiale Ausdehnung der ersten Federeinrichtung (129, 129', 234) durch ein Widerlager (127) begrenzt wird, dessen axiale Position durch eine Schraubengewindeeinrichtung einstellbar ist.

5. Reibungskupplung nach Anspruch 4, dadurch gekennzeichnet, daß das Widerlager (127) durch den Kopf eines Gewindebolzens (127, 226) oder einer Stellschraube, der bzw. die koaxial zu der Aussparung angeordnet ist, gebildet wird.

6. Reibungskupplung nach Anspruch 4 oder Anspruch 5, dadurch gekennzeichnet, daß jedes Federelement (129, 129', 234) in einer Aussparung (125, 125', 225) in dem Schwungrad angeordnet ist und gegen die Ringscheibe durch den Federdeckel (128, 128', 228) wirkt, der dazu dient, das Federelement in der Aussparung anzuordnen.

7. Reibungskupplung nach einem der Ansprüche 2 bis 6, dadurch gekennzeichnet, daß das Federelement eine Schraubendruckfeder (129) ist.

8. Reibungskupplung nach einem der Ansprüche 2 bis 6, dadurch gekennzeichnet, daß das Federelement mindestens eine Tellerfeder (129', 234) aufweist.

9. Reibungskupplung nach einem der Ansprüche 2 bis 6, dadurch gekennzeichnet, daß jedes Federelement aus elastomeren Material hergestellt ist.

10. Reibungskupplung nach Anspruch 1, dadurch gekennzeichnet, daß die erste Federeinrichtung aus elastomeren Material hergestellt ist.

11. Reibungskupplung nach einem der Ansprüche 1, 4, 5 oder 6, dadurch gekennzeichnet, daß die erste Federeinrichtung eine einzelne Tellerfeder (129') ist, die koaxial zu dem Schwungrad und zu der Ringscheibe liegt.

12. Reibungskupplung nach einem der Ansprüche 1 bis 11, dadurch gekennzeichnet, daß die Ringscheibe eine zweite Schwungradmasse ist, die koaxial zu dem ersten Schwungrad liegt.

13. Reibungskupplung nach einem der Ansprüche 1 bis 11, dadurch gekennzeichnet, daß die Kupplung (110) eine Lamellenkupplung ist, die eine Vielzahl getriebener Scheiben (115) aufweist, die jeweils zwischen axial trennbaren Antriebsscheiben (116) angeordnet sind, die drehfest mit dem Schwungrad verbunden sind, und daß die Ringscheibe (116A) eine der Antriebsscheiben aufweist.

## Revendications

1. Embrayage à friction (110) pour un véhicule à moteur qui comprend un volant (111) qui peut être fixé au vilebrequin d'un moteur, un plateau annulaire (116A) fixé coaxial et rotatif avec le volant et qui est sollicité à l'écart du volant par des premiers moyens de ressort (129, 129', 234) qui exercent une charge d'amortissement entre le volant et ledit plateau, un capot d'embrayage (112) fixé sur le volant et immobilisé par rapport à celui-ci dans la direction axiale, un plateau presseur (113), des seconds moyens de ressort (114) agissant entre le capot et le plateau presseur pour exercer une charge de serrage qui sollicite le plateau presseur vers le volant, au moins un plateau entraîné (115) intercalé entre le plateau presseur et le plateau annulaire, lesdits premiers moyens de ressort admettant une variation de la position axiale dudit plateau annulaire par rapport au capot pour exercer un amortissement sur la prise de l'embrayage et sur son débrayage, caractérisé en ce que l'écartement axial maximal entre le volant et le plateau annulaire est réglable et, lorsque l'embrayage (110) est complètement embrayé, la charge de serrage est supérieure à la charge d'amortissement et en ce que les premiers moyens de ressort agissent sur le plateau annulaire par l'intermédiaire d'une capsule d'extrémité de ressort (128, 128', 228) ce qui limite l'allongement axial maximal des premiers moyens de ressort, la capsule d'extrémité de ressort étant fixée au volant pour un déplacement axial par rapport à celui-ci de sorte que la capsule d'extrémité de ressort reste fixée au volant lors de l'enlèvement du plateau annulaire de l'embrayage.

2. Embrayage à friction selon la revendication 1, dans lequel les premiers moyens de ressort comprennent une pluralité d'éléments de ressort (129, 234) espacés de manière circonférentielle autour du volant.

3. Embrayage à friction selon la revendication 2, dans lequel les éléments de ressort (129, 234) sont logés chacun dans un évidement (25, 225) de la face du volant (111) orientée dans la direction axiale pour agir contre la face adjacente orientée dans la direction axiale du plateau annulaire (116A).

4. Embrayage à friction selon l'une quelconque des revendications 1 à 3, dans lequel l'allongement dans la direction axiale des premiers moyens de ressort (129, 129', 234) est limité par une butée (127) dont la position axiale est réglable par le vissage d'une vis.

5. Embrayage à friction selon la revendication 4, dans lequel la butée (127) est constituée par la tête d'un boulon fileté (127, 226) ou d'une vis d'arrêt qui est coaxiale avec ledit évidement.

6. Embrayage à friction selon l'une des revendications 4 ou 5, dans lequel chaque élément de ressort (129, 129', 234) est placé dans un évidement (125, 125', 225) du volant et agit contre le plateau annulaire par l'intermédiaire d'une capsule d'extrémité de ressort (128, 128', 228) qui sert à placer l'élément de ressort dans l'évidement.

7. Embrayage à friction selon l'une quelconque des revendications 2 à 6, dans lequel chaque élément de ressort est un ressort hélicoïdal de compression (129).

8. Embrayage à friction selon l'une quelconque des revendications 2 à 6, dans lequel chaque élément de ressort comprend au moins une rondelle Belleville (129', 234).

9. Embrayage à friction selon l'une quelconque des revendications 2 à 6, dans lequel chaque élément de ressort est réalisé en un matériau élastomère.

10. Embrayage à friction selon la revendication 1, dans lequel les premiers moyens de ressort sont réalisés en un matériau élastomère.

11. Embrayage à friction selon l'une quelconque des revendications 1, 4, 5 et 6, dans lequel les premiers moyens de ressort sont un unique ressort Belleville (129') coaxial avec le volant et avec ledit plateau annulaire.

12. Embrayage à friction selon l'une quelconque des revendications 1 à 11, dans lequel le plateau annulaire est une seconde masse de volant coaxiale avec le premier volant.

13. Embrayage à friction selon l'une quelconque des revendications 1 à 11, dans lequel l'embrayage (110) est un embrayage à plateaux multiples comprenant une pluralité de plateaux entraînés (115) placés chacun entre des plateaux d'entraînement séparables dans la direction axiale (116) fixés de manière rotative au volant, et dans lequel ledit plateau annulaire (116A) comprend l'un des plateaux d'entraînement.
